# EUROPÄISCHE PATENTANMELDUNG

(11) **EP 4 671 627 A1**
(43) Veröffentlichungstag der Anmeldung: **31.12.2025**
(21) Anmeldenummer: 24190530.6
(22) Anmeldetag: 24.07.2024
(51) Int. Cl.: F24D 10/00, C02F 1/32, C02F 1/42, F24D 17/00, F24D 19/10, F24H 15/174, F24H 15/215, F24H 15/219, F24H 15/238, F24H 15/32, F24H 15/335, F24H 15/37, F24H 15/395, F24H 15/414

(54) **DEZENTRALE WASSERVERSORGUNGSSTATION UND HAUSTECHNIKSYSTEM**

(30) Priorität: 28.06.2024 EP 24185265
(71) Anmelder: Uponor Innovation AB, 737 61 Virsbo (SE)
(72) Erfinder: Bartsch, Linda-Sabrina, 29225 Celle (DE); Biester, Jan Philipp, 31559 Haste (DE); Mainka, David, 58640 Iserlohn (DE); Kahl, Sebastian, 29225 Celle (DE)
(74) Vertreter: Fenner, Seraina

(57) **Zusammenfassung**

Die Erfindung betriff eine Wasserversorgungsstation (1), insbesondere zum Bereitstellen von Trinkwarmwasser, für eine einzelne Nutzeinheit, umfassend: Versorgungsanschlüsse zum Anschließen der dezentralen Wasserversorgungsstation (1) an einen Vorlauf (pVL) und einen Rücklauf (pRL) einer Gebäudeinstallation (33); einen Eingangsanschluss, insbesondere einen Trinkwasserzulauf (TWZ), zum Anschließen der dezentralen Wasserversorgungsstation (1) an eine Frischwasserversorgungsleitung; einen ersten Ausgangsanschluss, insbesondere einen Trinkwarmwasseranschluss (TWW), zum Anschließen der dezentralen Wasserversorgungsstation (1) an eine Nutzerinstallation (34a-34c) der Nutzeinheit mit wenigstens einer Zapfstelle; einen Wasser-Wasser-Wärmetauscher (2), der primärseitig mit den Versorgungsanschlüssen und sekundärseitig mit dem Eingangsanschluss und dem ersten Ausgangsanschluss verbunden ist; und eine Trinkwasseraufbereitungsvorrichtung (5), wobei die Trinkwasseraufbereitungsvorrichtung (5) hydraulisch zwischen den Eingangsanschluss und den Wasser-Wasser-Wärmetauscher (2) geschaltet ist.

Die Erfindung betrifft des Weiteren ein Haustechniksystem (30) für ein Gebäude mit mehreren Nutzeinheiten, insbesondere mehreren Wohnungen (31a bis 31d).

## Beschreibung

Die Anmeldung betrifft eine dezentrale Wasserversorgungsstation, insbesondere zum Bereitstellen von Trinkwarmwasser, für eine einzelne Nutzeinheit sowie ein Haustechniksystem für ein Gebäude mit mehreren Nutzeinheiten.

Dezentrale Wasserversorgungsstationen für einzelne Nutzeinheiten sind aus dem Stand der Technik bekannt. Beispielsweise ist aus der EP 2 369 243 A2 eine sogenannte Wohnungsstation für ein Haustechniksystem bekannt, die sehr effizient Trinkwarmwasser für Wohnungen, Büros, Ladengeschäfte und Gebäudeeinheiten bereitstellt. Derartige dezentrale Wasserversorgungsstationen stellen eine Schnittstelle zwischen einer Gebäudeinstallation und einer Nutzerinstallation innerhalb einer einzelnen Nutzeinheit dar, insbesondere zum Zusammenführen von Installationen innerhalb einer Wohnung mit der Installation außerhalb der Wohnung zu einer Zentralheizung.

Die Aufteilung von Haustechniksystemen, insbesondere zur Verteilung von Wasser und Wärme, in zentrale Komponenten einer Gebäudeinstallation und weitere Komponenten, die von einer dezentralen Wasserversorgungsstation im Bereich einer einzelnen Nutzeinheit übernommen werden, bringt eine Reihe von Vorteilen, wie insbesondere einer verbesserten Energieeffizienz und besserer Anpassbarkeit an die Bedürfnisse der jeweiligen Nutzer mit sich.

Problematisch an bekannten Installationen ist, dass die Nutzer einzelner Nutzeinheiten keine oder nur sehr wenig Kontrolle über die Qualität des von der zentralen Gebäudeinstallation bereitgestellten Wassers haben.

Aufgabe der vorliegenden Erfindung ist es, weiter verbesserte Haustechniksysteme und insbesondere Wasserinstallationen zu ermöglichen. Insbesondere sollen eine verbesserte dezentrale Wasserversorgungsstation und ein entsprechendes Haustechniksystem vorgeschlagen werden, die einem Nutzer eine Einflussnahme auf die Qualität des in der Nutzeinheit bereitgestellten Wassers ermöglichen.

Gemäß einem ersten Aspekt der Offenbarung wird eine dezentrale Wasserversorgungsstation für eine einzelne Nutzeinheit vorgeschlagen. Insbesondere kann es sich um eine sogenannte Trinkwasserstation, eine Wohnungsstation oder eine Heat Interface Unit (HIU) handeln, die zum Bereitstellen von Trinkwarmwasser für die Nutzeinheit eingerichtet ist.

Die dezentrale Wasserversorgungsstation umfasst Versorgungsanschlüsse zum Anschließen der dezentralen Wasserversorgungsstation an einen Vorlauf und einen Rücklauf einer Gebäudeinstallation, einen Eingangsanschluss, insbesondere einen Trinkwasserzulauf, zum Anschließen der dezentralen Wasserversorgungsstation an eine Frischwasserversorgungsleitung, und einen ersten Ausgangsanschluss, insbesondere einen Trinkwarmwasseranschluss, zum Anschließen der dezentralen Wasserversorgungsstation an eine Nutzerinstallation der Nutzeinheit mit wenigstens einer Zapfstelle. Die dezentrale Wasserversorgungsstation umfasst des Weiteren einen Wasser-Wasser-Wärmetauscher, der primärseitig mit den Versorgungsanschlüssen und sekundärseitig mit dem Eingangsanschluss und dem ersten Ausgangsanschluss verbunden ist, und eine Trinkwasseraufbereitungsvorrichtung, wobei die Trinkwasseraufbereitungsvorrichtung hydraulisch zwischen den Eingangsanschluss und den Wasser-Wasser-Wärmetauscher geschaltet ist.

Durch die Vorsehung einer Trinkwasseraufbereitungsvorrichtung als Teil einer dezentralen Wasserversorgungsstation kann die Qualität des Wassers der Nutzerinstallation innerhalb einer Nutzeinheit verbessert werden. Insbesondere kann an einer für die Nutzeinheit zentralen, für die Gebäudeinstallation jedoch dezentralen Stelle eine Filterung, Sterilisation, Entkalkung und/oder Enthärtung des Frischwassers der Gebäudeinstallation vorgenommen werden. Somit können Verunreinigungen des Wassers aus der Frischwasserversorgungsleitung im Bereich der gesamten Nutzerinstallation vermieden werden. Dabei wird neben entsprechenden Zapfstellen oder daran angeschlossenen Endgeräten auch die dezentrale Wasserversorgungsstation und die Nutzerinstallation selbst vor Beschädigungen durch Verkalkung oder ähnliches geschützt.

Bei der beschriebenen, dezentrale Wasserversorgungsstation befindet sich die Trinkwasseraufbereitungsvorrichtung sowohl räumlich als auch technisch unter Kontrolle des jeweiligen Nutzers. Auf diese Weise kann insbesondere jeder Nutzer selbst entscheiden, ob und in welchem Umfang er eine Aufbereitung des Wassers für die jeweilige Nutzeinheit wünscht. Zudem können mit der Trinkwasseraufbereitungsvorrichtung verbundene Wartungsarbeiten durch den jeweiligen Nutzer selbst oder vom ihm beauftragte Fachleute durchgeführt werden, ohne dass ein Zugang zu der zentralen Gebäudeinstallation erforderlich ist. Optional ist oder umfasst die Trinkwasseraufbereitungsvorrichtung wenigstens eine der folgenden Komponenten:
- eine Desinfektionseinheit zum Desinfizieren des von dem Eingangsanschluss bereitgestellten Wassers, insbesondere mittels Bestrahlung durch UV-Strahlung;
- eine Filtereinheit, insbesondere ein Aktiv-Kohle-Filter oder Sedimentfilter, zum Reinigen des von dem Eingangsanschluss bereitgestellten Wassers;
- eine Entkalkungseinheit zum Entkalken des von dem Eingangsanschluss bereitgestellten Wassers, insbesondere mittels heterogener Katalyse; und/oder
- eine Enthärtungseinheit zum Enthärten des von dem Eingangsanschluss bereitgestellten Wassers, insbesondere mittels Ionenaustauschs durch Salz.

Vergleichbare Trinkwasseraufbereitungsvorrichtungen sind aus einzelnen Endgeräten beziehungsweise als eigenständige Installationen bekannt. Durch deren Integration in eine dezentrale Wasserversorgungsstation kann ihre Funktion für eine Mehrzahl von Einrichtungen, beispielsweise einer Mehrzahl von Zapfstellen und Endgeräten, zur Verfügung gestellt werden.

Optional umfasst die dezentrale Wasserversorgungsstation eine Überwachungskomponente zum Überwachen einer Funktion und/oder wenigstens eines Betriebsstoffes der Trinkwasseraufbereitungsvorrichtung. Beispielsweise kann eine manuelle Füllanzeige oder eine elektronische Überwachungskomponente vorgesehen sein. Dabei kann die Überwachungskomponente optional auch einen Teil einer elektronischen Steuervorrichtung der dezentralen Wasserversorgungsstation bilden, und dazu eingerichtet sein, im Falle einer Fehlfunktion der Trinkwasseraufbereitungsvorrichtung oder einer unzureichenden Menge wenigstens eines Betriebsstoffes einen Nutzer der Nutzeinheit eine Warnmeldung anzuzeigen. Da die dezentrale Wasserversorgungsstation typischerweise entweder in der Nutzeinheit selbst oder in räumlicher Nähe dazu, beispielsweise an einem Übergabepunkt im Eingangsbereich zu der Nutzeinheit, angeordnet ist, kann ein Nutzer jederzeit die Funktion der Trinkwasseraufbereitungsvorrichtung erkennen und gegebenenfalls erforderliche Betriebsstoffe nachfüllen. Eine im Vergleich dazu weniger zugängliche und damit aufwendigere Kontrolle und Wartung in einem zentralen Installationsraum der Gebäudeinstallation, insbesondere in einem Keller, kann damit entfallen.

Optional umfasst die dezentrale Wasserversorgungsstation des Weiteren wenigstens einen zweiten Ausgangsanschluss, insbesondere einen Trinkkaltwasseranschluss, zum Bereitstellen von gefiltertem Wasser von der dezentralen Wasserversorgungsstation an die Nutzerinstallation, wobei der wenigstens eine zweiten Ausgangsanschluss hydraulisch hinter der Trinkwasseraufbereitungsvorrichtung anschlossen ist. Alternativ oder zusätzlich umfasst die dezentrale Wasserversorgungsstation wenigstens einen dritten Ausgangsanschluss, insbesondere einen Nutzwasseranschluss, zum Bereitstellen von ungefiltertem Wasser von der dezentralen Wasserversorgungsstation an die Nutzerinstallation, wobei der wenigstens einen dritte Ausgangsanschluss hydraulisch direkt, unter Umgehung der Trinkwasseraufbereitungsvorrichtung, mit dem Eingangsanschluss verbunden ist. Durch die Vorsehung unterschiedlicher Ausgangsanschlüsse für ungefiltertes Wasser, gefiltertes Kaltwasser und gefiltertes Warmwasser kann die dezentrale Wasserversorgungsstation unterschiedliche Wasserarten für die Nutzerinstallation bereitstellen. Beispielsweise kann sie gefiltertes und/oder enthärtetes Trinkwasser an einer Zapfstelle in einem Küchenbereich zur Verfügung stellen, während ungefiltertes Nutzwasser beispielsweise für eine Klospülung bereitgestellt wird.

Optional kann die dezentrale Wasserversorgungsstation weitere Komponenten, wie beispielsweise einen hydraulisch zwischen die Versorgungsanschlüsse und den Wasser-Wasser-Wärmetauscher geschalteten Durchflussregler zur Regelung der Wärmeübertragung und/oder einen elektrischen Durchlauferhitzer zum weiteren Anheben der Trinkwarmwassertemperatur umfassen. Derartige Zusatzkomponenten ermöglichen es, weitere Funktionen in die dezentrale Wasserversorgungsstation zu integrieren. Dabei werden möglichst viele Komponenten der Nutzerinstallation an einem zentralen Punkt in oder nahe der Nutzeinheit zusammenzuführen, so dass diese gemeinsam installiert, überwacht, gewartet und/oder gesteuert werden können.

Optional umfasst die dezentrale Wasserversorgungsstation ein Gehäuse, wobei der Wasser-Wasser-Wärmetauscher und die Trinkwasseraufbereitungsvorrichtung von dem Gehäuse umgeben sind, und die Anschlüsse in einem Anschlussbereich des Gehäuses im Bereich einer Gehäusewand oder Gehäuseöffnung angeordnet sind. Durch die Vorsehung eines derartigen Gehäuses eignet sich die dezentrale Wasserversorgungsstation insbesondere zur Installation innerhalb einer Nutzeinheit wie einer Wohnung, beispielsweise in einem Flur.

Optional ist die Trinkwasseraufbereitungsvorrichtung in einem Bereich des Gehäuses angeordnet, in dem sich keine Rohrleitungen befinden, und füllt eine gesamte zur Verfügung stehende Tiefe des Gehäuses aus. Eine derartige Anordnung ermöglicht es den innerhalb eines Gehäuses zur Verfügung stehenden Raum bestmöglich für die Trinkwasseraufbereitungsvorrichtung zu nutzen.

Optional beträgt die Tiefe der dezentralen Wasserversorgungsstation maximal 110 mm. Mit einer derartigen Tiefe kann die Wasserversorgungsstation beispielsweise hinter einer Trockenbauwand im Bereich einer Hinterwandinstallation installiert werden.

Optional weist die dezentrale Wasserversorgungsstation einen Anschluss zum Zuführen wenigstens eines Betriebsmittels für die Trinkwasseraufbereitungsvorrichtung von außerhalb der dezentralen Wasserversorgungsstation auf. Auf diese Weise können beispielsweise große Vorratsbehälter für Betriebsmittel der Trinkwasseraufbereitungsvorrichtung von außerhalb eines in seinem Volumen und/oder seiner Tiefe beschränkten Gehäuses der Wasserversorgungsstation zugeführt und bei Bedarf leichter ausgetauscht werden.

Gemäß einem weiteren Aspekt der Offenbarung wird ein Haustechniksystem für ein Gebäude mit mehreren Nutzeinheiten vorgeschlagen. Bei den Nutzeinheiten kann es sich insbesondere um Wohnungen, jedoch auch um Büros, Ladengeschäfte oder andere Gebäudeeinheiten oder -teile handeln, die über eine eigene Nutzerinstallation verfügen. Im Bereich mindestens einer der Nutzeinheiten ist eine dezentrale Wasserversorgungsstation der oben genannten Art angeordnet.

Bei einem derartigen Haustechniksystem kann die Wasserqualität in der Nutzeinheit durch den jeweiligen Nutzer kontrolliert und beeinflusst werden, in dem sich die dezentrale Wasserversorgungsstation befindet. Eine Änderung im Bereich anderer Nutzeinheiten ist dafür nicht erforderlich, so dass sich die offenbarte Lösung insbesondere zum Nachrüsten bestehender Haustechniksysteme eignet.

In einem bevorzugten Ausbauzustand befindet sich im Bereich einer jeden Nutzeinheit des Haustechniksystems eine entsprechende dezentrale Wasserversorgungsstation. Derartige Lösungen eignen sich insbesondere für Neubauten, in denen die Kontrolle über die Qualität des Wassers des Haustechniksystems von vorneherein an die einzelnen Nutzeinheiten übertragen werden soll.

Obgleich die beschriebene dezentrale Wasserversorgungsstation insbesondere für den Einsatz in Gebäudeinstallationen für mehreren Nutzeinheiten vorgesehen ist, kann sie selbstverständlich auch in Gebäuden mit nur einer einzelnen Nutzeinheit Verwendung finden. Insbesondere ist es möglich, eine derartige dezentrale Wasserversorgungsstation in einem Wohnbereich anzuordnen, während verbleibende Teile der Nutzeinheit, beispielsweise ein Sanitär- und/oder Toilettenbereich, lediglich mit ungefiltertem Wasser versorgt werden.

Die Erfindung wird nachfolgend anhand von unterschiedlichen Ausführungsbeispielen im Detail beschrieben. Dabei werden gleiche Bezugszeichen für gleiche oder gleichartige Komponenten der Ausführungsbeispiele verwendet. Dies bedeutet jedoch nicht, dass die entsprechenden Komponenten unterschiedlicher Ausführungsbeispiele in jeder Beziehung identisch sind.
Figur 1 zeigt eine schematische Darstellung einer ersten dezentralen Wasserversorgungsstation.
Figur 2 zeigt eine schematische Darstellung einer zweiten dezentralen Wasserversorgungsstation.
Figur 3 zeigt eine schematische Darstellung einer dritten dezentralen Wasserversorgungsstation.
Figur 4 zeigt schematisch eine Gebäudeinstallation eines Gebäudes mit mehreren Nutzeinheiten.

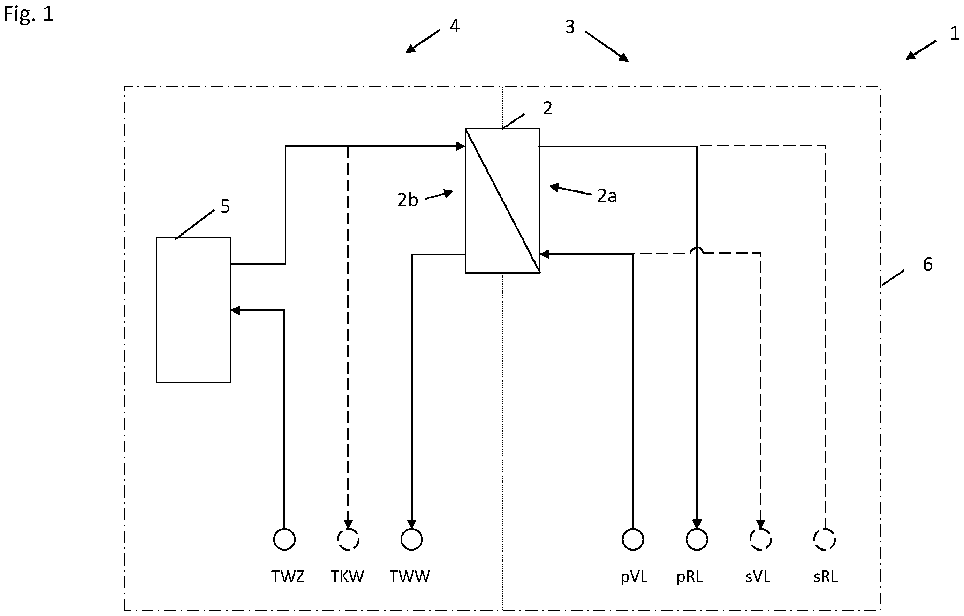

Figur 1 zeigt eine schematische Darstellung einer ersten dezentralen Wasserversorgungsstation 1. Die Wasserversorgungsstation 1 gemäß Figur 1 umfasst einen Wasser-Wasser-Wärmetauscher 2, beispielsweise in Form eines Plattenwärmetauschers mit einer Primärseite 2a und einer hydraulisch davon entkoppelten Sekundärseite 2b. Wird die Primärseite 2a des Wasser-Wasser-Wärmetauschers 2 von Warmwasser durchflossen, kann die Wärmeenergie des Wassers auf der Primärseite 2a dazu genutzt werden, Wasser, das auf der Sekundärseite 2b fließt, zu erwärmen. Auf diese Weise ist ein Energiefluss von der Primärseite 2a zu der Sekundärseite 2b des Wasser-Wasser-Wärmetauschers 2 möglich, ohne dass es zu einem direkten Kontakt der jeweiligen Wasserströme kommt.

Durch den Wasser-Wasser-Wärmetauscher 2 wird die Wasserversorgungsstation 1 hydraulisch in einen Heizungsteil 3 und einen Trinkwasserteil 4 aufgeteilt. Den beiden Teilen 3 und 4 sind entsprechende Anschlüsse der Wasserversorgungsstation 1 zugeordnet.

Insbesondere befinden sich im Heizungsteil 3 zwei Versorgungsanschlüsse zum Anschließen der Wasserversorgungsstation 1 an einen primären Vorlauf pVL beziehungsweise einen primären Rücklauf pRL einer Gebäudeinstallation. Des Weiteren umfasst der Heizungsteil 3 optional weitere Anschlüsse zum Anschließen der Wasserversorgungsstation 1 an einen sekundären Vorlauf sVL und einen sekundären Rücklauf sRL einer Nutzerinstallation. Auf diese Weise kann das von dem primären Vorlauf pVL bereitgestellte Heizungswarmwasser auch für einen internen Heizkreis innerhalb der Nutzerinstallation bereitgestellt bzw. durchgeschleift werden.

Der Trinkwasserteil 4 umfasst einen Trinkwasserzulauf TWZ, einen optionalen Trinkkaltwasseranschluss TKW und einen Trinkwarmwasseranschluss TWW. Über den Trinkwasserzulauf TWZ wird die Wasserversorgungsstation mit einer Frischwasserleitung, typischerweise einer Trinkwasserversorgungsleitung einer Gebäudeinstallation verbunden. Über den Trinkkaltwasseranschluss TKW und den Trinkwarmwasseranschluss TWW werden Trinkkaltwasser und durch den Wasser-Wasser-Wärmetauscher 2 erwärmtes Trinkwarmwasser für wenigstens eine Zapfstelle innerhalb der Nutzerinstallation bereitgestellt.

Die vorliegende Wasserversorgungsstation 1 unterscheidet sich insbesondere dadurch von anderen Wasserversorgungsstationen, dass innerhalb der Wasserversorgungsstation 1 eine Trinkwasseraufbereitungsvorrichtung 5 angeordnet ist. Die Trinkwasseraufbereitungsvorrichtung 5 befindet sich im dargestellten Ausführungsbeispiel in Fließrichtung direkt hinter dem Trinkwasserzulauf TWZ. Somit wird sowohl der Wasser-Wasser-Wärmetauscher 2 innerhalb der Wasserversorgungsstation 1 als auch alle an dem Trinkkaltwasseranschluss TKW sowie dem Trinkwarmwasseranschluss TWW mit Wasser versorgt, das zuvor durch die Trinkwasseraufbereitungsvorrichtung 5 aufbereitet wurde. Eine weitere Vorsehung von Filtern oder ähnlichen Vorrichtungen im Bereich der Nutzeinheit ist damit in der Regel nicht mehr erforderlich. Gleichzeitig wird die Nutzerinstallation unabhängig von der Qualität des über den Trinkwasserzulauf TWZ bereitgestellten Frischwassers. Insbesondere in Bereichen, mit sehr hartem Trinkwasser oder in Wasserversorgungsnetzen mit variierender Wasserqualität kann durch die Vorsehung der Trinkwasseraufbereitungsvorrichtung 5 somit eine gleichbleibende und bessere Qualität des Trinkwassers innerhalb der Nutzeinheit sichergestellt werden.

Im in der Figur 1 dargestellten Ausführungsbeispiel sind sämtliche Komponenten der Wasserversorgungsstation 1 auf einer gemeinsamen Montage- oder Trägerplatte 6 angeordnet. Somit können alle Komponenten von einem Installateur gemeinsam installiert werden, beispielsweise in einem bauseits vorhandenen Schacht oder an einem außerhalb einer Wohnung angeordneten Übergabepunkt, wie beispielsweise in einem Treppenhaus.

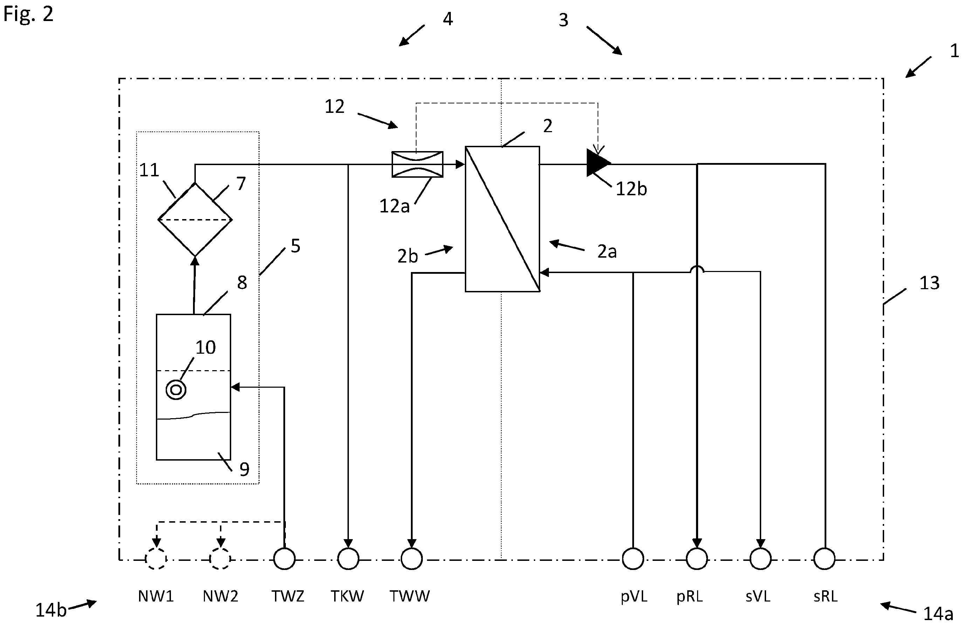

Figur 2 zeigt eine schematische Darstellung einer zweiten dezentralen Wasserversorgungsstation 1. In dem in der Figur 2 dargestellten Ausführungsbeispiel handelt es sich insbesondere um eine rein mechanisch arbeitende Wasserversorgungsstation 1.

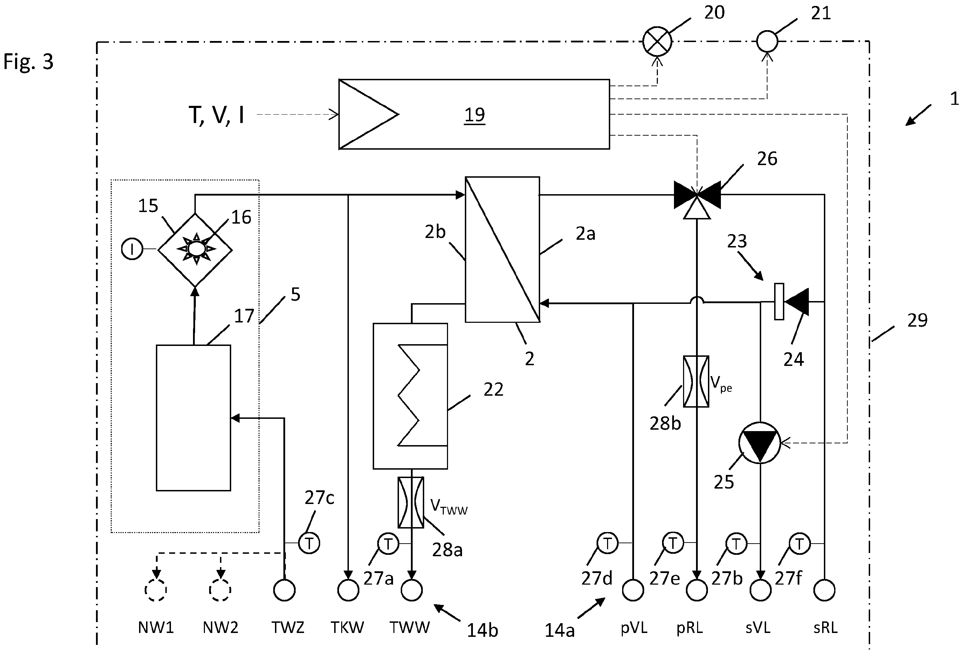

Die in der Figur 2 dargestellte Wasserversorgungsstation 1 ohne eingebaute Umwälz- oder Zirkulationspumpe im sekundären Heizkreis eignet sich insbesondere für konventionelle Radiatoren, die direkt mit Heizungswasser des primären Vorlaufs pVL versorgt werden. In einer alternative, nicht dargestellten Ausführungsform umfasst die Wasserversorgungsstation 1 zusätzlich eine interne Zirkulationspumpe zwischen dem sekundären Rücklauf sRL und dem sekundären Vorlauf sVL. Eine derartige Ausgestaltung eignet sich insbesondere zum Bedienen einer Fußbodenheizung mit Heizungswasser, wie unten anhand der Figur 3 im Detail beschrieben.

Der Aufbau der Wasserversorgungsstation 1 gemäß Figur 2 entspricht weitgehend dem Aufbau der Wasserversorgungsstation 1 gemäß Figur 1. Dementsprechend werden nachfolgend lediglich die Abweichungen der mechanischen Wasserversorgungsstation 1 beschrieben.

In der beschriebenen Ausgestaltung umfasst die Trinkwasseraufbereitungsvorrichtung 5 zwei Einzelkomponenten in Form einer Filtereinheit 7 und einer Enthärtungseinheit 8. Im Ausführungsbeispiel ist die Enthärtungseinheit 8 in Flussrichtung vor der Filtereinheit 7 angeordnet, um ein Verkalken der Filtereinheit 7 selbst zu verhindern. Grundsätzlich ist jedoch auch eine umgekehrte Anordnung der Komponenten 7 und 8, die Anordnung nur einer der Komponenten 7 oder 8, und/oder die Anordnung weiterer Aufbereitungskomponenten möglich. Außerdem ist es auch möglich, mehrere Funktionseinheiten in einem einzelnen Bauteil zu integrieren.

Bei der Enthärtungseinheit 8 handelt es sich insbesondere um eine Funktionseinheit, die auf dem Funktionsprinzip des Ionenaustauschs arbeitet. Hierzu ist in einem unteren Vorratsteil der Enthärtungseinheit 8 ein Salzvorrat 9 vorgesehen, der für einen Austausch von Kalzium- und Magnesiumionen in dem Frischwasser des Trinkwasserzulaufs durch Natriumionen des zugesetzten Salzes, insbesondere NaCl, sorgt. Der Salzvorrat 9 wird dabei kontinuierlich aufgebraucht und muss daher nach der Enthärtung einer vorbestimmten Wassermenge erneuert werden. Hierzu ist im beschriebenen Ausführungsbeispiel eine mechanische Überwachungskomponente in Form eines Schwimmers 10 vorgesehen. Der Schwimmer steigt abhängig von einer Solekonzentration in dem Vorratsteil nach oben, so dass ein Nutzer überwachen kann, ob sich in der Enthärtungseinheit 8 noch ein ausreichender Salzvorrat 9 befindet.

Bei der Filtereinheit 7 handelt es sich beispielsweise um einen Aktivkohlefilter oder einen Sedimentfilter, der ungewünschte Partikel aus dem Frischwasserstrom mittels Adsorption oder Filtrierung herausfiltert. Um den Zustand des eigentlichen Filters der Filtereinheit 7 inspizieren zu können, weist die Filtereinheit 7 ein Fenster 11 auf, das als weitere Überwachungskomponente beziehungsweise als Zugangsöffnung zum Austauschen oder Reinigen des Filters dient.

Die Wasserversorgungsstation 1 gemäß Figur 2 zeigt zudem eine mechanische Regelung der Volumenströme durch den Wasser-Wasser-Wärmetauscher 2 durch einen mechanischen Proportionalmengenregler 12 (PM-Regler). Der PM-Regler umfasst einen im Trinkwasserteil 4 angeordneten Durchflussmesser 12a und ein funktional damit gekoppeltes, im Heizungsteil 3 angeordnetes Drosselventil 12b. Beispielsweise ist der Durchflussmesser 12a vor einem sekundären Eingangsanschluss des Wasser-Wasser-Wärmetauschers 2 und das Drosselventil 12b zwischen einem sekundären Ausgangsanschluss des Wasser-Wasser-Wärmetauschers und dem primären Rücklaufanschluss PRL angeordnet. Der Durchflussmesser 12a und das Drosselventil 12b können als einzelne, mechanisch gekoppelte Bauteile oder als integriertes Bauteil ausgebildet sein. In beiden Fällen sind die entsprechenden Durchflüsse hydraulisch voneinander getrennt.

Der von dem Durchflussmesser 12a erfasste Durchfluss durch den Wasser-Wasser-Wärmetauscher 2 wird zur Ansteuerung des Drosselventils 12b genutzt. Fließt kein Frischwasser im Trinkwasserteil 4 ist das Drosselventil 12b vollständig oder zumindest fast vollständig geschlossen, so dass keine oder nur sehr wenig Wärme von den primären Versorgungsanschlüssen an den Wasser-Wasser-Wärmetauscher 2 abgegeben wird. Mit zunehmendem Fluss durch den sekundären Teil des Wasser-Wasser-Wärmetauschers 2 wird das Drosselventil 12b weiter geöffnet, um eine adäquate Menge von Wärmenergie zum Erwärmen des sekundären Trinkwarmwasserstrom bereitzustellen.

Im in der Figur 2 dargestellten Ausführungsbeispiel sind alle Komponenten der Wasserversorgungsstation 1 in einem geschlossenen Gehäuse 13 angeordnet. Dabei befinden sich die Anschlüsse pVL, pRL, sVL und sRL in einem ersten Anschlussbereich 14a an einer unteren oder hinteren Gehäusewand des Gehäuse 13. Die Trinkwasseranschlüsse TWZ, TKW und TWW befinden sich in einem zweiten Anschlussbereich 14b an derselben oder einer anderen Gehäusewand.

Zusätzlich weist die Wasserversorgungsstation 1 gemäß Figur 2 zwei weitere Anschlüsse in Form von Nutzwasseranschlüssen NW1 und NW2 auf. Die Nutzwasseranschlüsse NW1 und NW2 sind hydraulisch direkt, das heißt in Fließrichtung vor der Trinkwasseraufbereitungsanlage 5, mit dem Trinkwasserzulauf TWZ verbunden. Auf diese Weise können ausgewählte Teile einer Nutzerinstallation mit ungefiltertem Frischwasser versorgt werden. Dies eignet sich zum Beispiel zum Anschluss von Installationen oder Endgeräten, für die eine Filterung des zugeleiteten Frischwassers nicht erforderlich ist. Beispiele hierfür sind beispielsweise Klospülungen oder Haushaltsgeräte wie beispielsweise ein Geschirrspüler, die über eigene Wasseraufbereitungsanlagen verfügen. Dadurch dass nicht sämtliches Frischwasser der Nutzerinstallation durch die Wasseraufbereitungseinheit 5 geleitet wird, kann insbesondere deren Lebensdauer verlängert und der Verbrauch von Betriebsmitteln reduziert werden.

Figur 3 zeigt eine schematische Darstellung einer dritten dezentralen Wasserversorgungsstation 1. Insbesondere handelt es sich bei der dritten Wasserversorgungsstation 1 um eine vollständig elektronisch gesteuerte bzw. geregelte Wasserversorgungsstation. Wie zuvor werden erneut lediglich die Unterschiede bezüglich der zuvor genannten Wasserversorgungsstationen 1 beschrieben.

Im in der Figur 3 dargestellten Ausführungsbeispiel umfasst die Trinkwasseraufbereitungsvorrichtung 5 eine Desinfektionseinheit 15 und eine Entkalkungseinheit 17. Ähnlich wie zuvor beschrieben befindet sich die Entkalkungseinheit 17 in Durchströmungsrichtung vor der Desinfektionseinheit 15, um ein Verkalken aller hydraulisch stromabwärts angeordneter Komponenten zu verhindern.

Die Desinfektionseinheit 15 verwendet zum Desinfizieren des Frischwassers, insbesondere zum Abtöten von Keimen, eine UV-Quelle 16. Über die UV-Quelle 16 wird relativ intensive, harte UV-Strahlung erzeugt, die Keime beim Durchfließen einer entsprechenden Kammer der Desinfektionseinheit 15 zerstören. Dabei wird die UV-Quelle 16 elektrisch angesteuert, wobei deren Funktion überwacht werden kann, beispielsweise durch Messung eines Betriebsstroms I der UV-Quelle 16.

Bei der Entkalkungseinheit 17 handelt es sich im Ausführungsbeispiel um eine Einrichtung zum Entkalken des von dem Trinkwasserzulauf TWZ bereitgestellten Frischwassers mittels heterogener Katalyse. Dabei dienen sogenannte Impfkristalle, beispielsweise in Form von Polymergranulaten, zum gezielten Wachsen von Kalkkristallen. Die Kalkkristalle wachsen zu einer vorbestimmten Größe heran und werden dann mit dem Wasserstrom abgeführt. Die auf diese Weise abgeführten Kalkkristalle haften sich insbesondere nicht mehr an anderen Teilen einer Nutzerinstallation an.

Die Ansteuerung und/oder Überwachung der verschiedenen Funktionseinheiten der Wasseraufbereitungsvorrichtung 5 erfolgt im beschriebenen Ausführungsbeispiel durch eine elektronische Steuervorrichtung 19 der Wasserversorgungsstation 1. Dabei kann es sich entweder um eine dedizierte Steuervorrichtung oder um einen Teil einer allgemeinen Steuervorrichtung der dezentralen Wasserversorgungsstation 1 handeln. Im einfachsten Fall überwacht die Steuervorrichtung 19 die Betriebszeit der Trinkwasseraufbereitungsvorrichtung 5. Für eine genauere Überwachung können alternativ oder zusätzlich Daten zum Betriebsstrom I der UV-Quelle 16 ausgewertet werden.

Die Funktion beziehungsweise Nicht-Funktion der Trinkwasseraufbereitungsvorrichtung 5 beziehungsweise der darin enthaltenen Funktionseinheiten 15 und 17 wird von der elektronischen Steuervorrichtung 19 durch entsprechende Kontrolllampen 20 oder Anzeigesymbole einer Multifunktionsanzeige angezeigt. Da sich die Wasserversorgungsstation 1 typischerweise innerhalb einer Nutzeinheit, also insbesondere innerhalb einer Wohnung befindet, wird so ein Nutzer frühzeitig auf etwaige Störungen der Trinkwasseraufbereitungsvorrichtung 5 aufmerksam gemacht. Alternativ oder zusätzlich kann die Steuervorrichtung 19 über eine optionale elektronische Schnittstelle 21, beispielsweise zum Internet oder einem lokalen Gebäudebus, eine Warn- oder Fehlermeldung an ein Gerät, wie beispielsweise eine lokale Heizungssteuerung oder ein Smartphone, des Nutzers verschicken.

Die Wasserversorgungsstation 1 gemäß Figur 3 umfasst des Weiteren einen elektrischen Durchlauferhitzer 22, der zwischen einem sekundärseitigen Ausgang des Wasser-Wasser-Wärmetauschers 2 und dem Anschluss für Trinkwarmwasser TWW geschaltet ist. Alternativ kann der elektrische Durchlauferhitzer 22 auch in einer Zulaufleitung, beispielsweise zwischen dem primären Vorlaufanschluss pVL und dem primärseitigen Eingangsanschluss des Wasser-Wasser-Wärmetauschers 2 angeordnet sein. Die Steuervorrichtung 19 überwacht, beispielsweise mittels eines ersten Temperatursensors 27a, die Wassertemperatur an dem Ausgangsanschluss für Trinkwarmwasser TWW. Liegt sie unterhalb eines vorgegebenen Sollwerts Tₛₒₗₗ, aktiviert sie den elektrischen Durchlauferhitzer 22, um das Temperaturniveau des Trinkwarmwassers am Trinkwarmwasseranschluss TWW auf die gewünschte Solltemperatur Tₛₒₗₗ anzuheben. Im Ausführungsbeispiel übernimmt diese Aufgabe die zentrale Steuervorrichtung 19. Alternativ kann diese Aufgabe auch von einer dezentralen Temperatursteuerung innerhalb des elektrischen Durchlauferhitzers 22 übernommen werden.

Der Heizungsteil 3 der beschriebenen Wasserversorgungsstation 1 unterscheidet sich des Weiteren von den zuvor beschriebenen Ausführungsbeispielen dadurch, dass ein sekundärer Heizkreis als sogenannter Einspritzkreis 23 ausgestaltet ist. Hierzu wird mittels eines Rückschlagventils 24 und einer Umwälz- oder Zirkulationspumpe 25 Heizungswasser in dem sekundären Heizkreis der Nutzeinheit zirkuliert. Dabei wird die Temperatur des zirkulierten Nutzwarmwassers mittels eines elektrisch ansteuerbaren Dreiwegeventils 26 und eines zweiten Temperatursensors 27b auf eine gewünschte Solltemperatur T_{heiz} für den sekundären Heizkreis geregelt. Ein derartiger Ansatz eignet sich insbesondere bei Installationen, bei denen die Wasserversorgungsstation 1 mit einer relativ hohen Vorlauftemperatur des primären Vorlaufs pVL versorgt wird, und wohnungsintern eine niedrigere Heiztemperatur T_{heiz} für den sekundären Vorlauf sVL verwenden werden soll.

Das Dreiwegeventil 26 dient zugleich zur Steuerung des Warmwasserflusses von dem primären Vorlauf pVL durch die Primärseite 2a des Wasser-Wasser-Wärmetauschers 2. Hierzu erfasst die zentrale Steuervorrichtung 19 über einen ersten Durchflusssensor 28a eine Flussrate V_{TWW} auf der Sekundärseite 2b des Wasser-Wasser-Wärmetauschers 2. Entsprechend der benötigten Wärmeenergie im sekundären Trinkwarmwasserfluss wird das Dreiwegeventil 26 entsprechend weit geöffnet. Dabei kann bei Bedarf ein Warmwasserfluss von dem primären Vorlauf zu dem Einspritzkreis 23 vorübergehend ganz oder teilweise unterbrochen wird, um ausreichend Wärmeenergie in den Trinkwasserteil 4 übertragen zu können.

Im Ausführungsbeispiel umfasst die Wasserversorgungsstation 1 weitere Temperatursensoren 27c bis 27f und ein weiteren Durchflusssensor 28b, die zur Überwachung, Ansteuerung und/oder Optimierung verschiedener Funktionen von der Steuervorrichtung 19 verwendet werden können.

Beispielsweise kann die Steuervorrichtung 19 der elektronischen Wasserversorgungsstation 1 Verbrauchsdaten der Nutzerinstallation erfassen. Insbesondere kann durch Durchfluss- und Temperaturdifferenzmessungen zwischen dem primären Vorlauf pVL und dem primären Rücklauf pRL die insgesamt durch die Wasserversorgungsstation 1 aus der Gebäudeinstallation entnommene Wärmemenge berechnet und beispielsweise über die Schnittstelle 21 bereitstellt werden.

Sämtliche Komponenten der dezentralen Wasserversorgungsstation 1 gemäß Figur 3 sind in einem halboffenen Gehäuse angeordnet, das durch Trägerplatte (nicht dargestellt) und eine Haube 29 gebildet wird. Die Haube 29 ist nach unten offen, so dass die Anschlüsse der Anschlussbereiche 14a und 14b mit entsprechenden Rohrleitungen der Gebäudeinstallation beziehungsweise der Nutzerinstallation verbunden werden können.

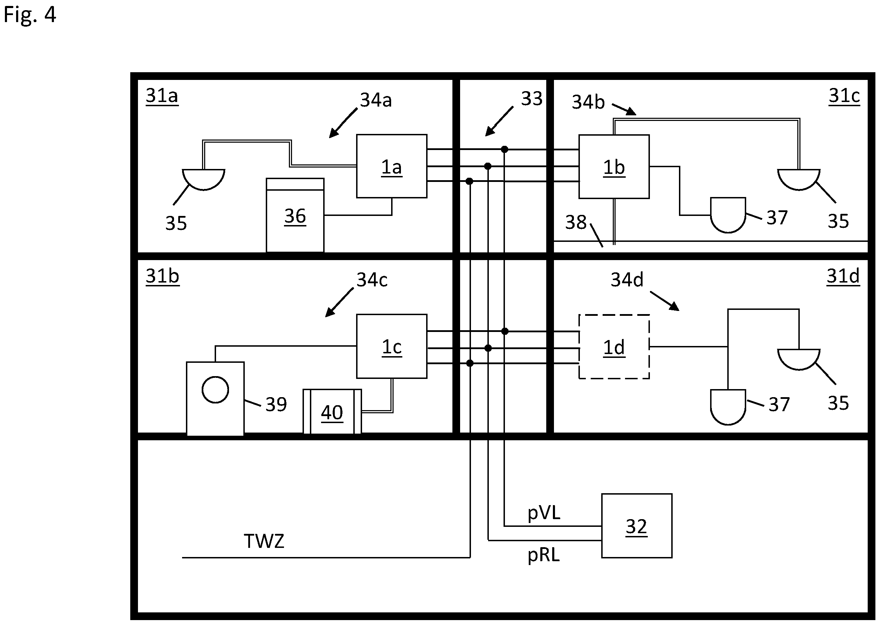

Figur 4 zeigt schematisch eine Haustechniksystem 30 eines Gebäudes mit mehreren Nutzeinheiten. Im beschriebenen Ausführungsbeispiel umfasst das Gebäude insgesamt vier Wohnungen 31a bis 31d. Die Wohnungen 31a bis 31d können beispielsweise auf verschiedenen Etagen oder in verschiedenen Bereichen des Gebäudes angeordnet sein. Alle Wohnungen 31a bis 31d werden von einer Gebäudeinstallation 33 mit einer zentralen Wärmequelle 32, beispielsweise einem Heizkessel, einer Wärmepumpe oder einer Übergabestation einer Fernwärmeinstallation, über einen primären Vorlauf pVL und einen primären Rücklauf pRL mit Wärmeenergie versorgt. Des Weiteren umfasst die Gebäudeinstallation 30 ein Frischwasserleitung für einen Trinkwasserzulauf TWZ jeder der Wohnungen 31a bis 31d.

Für die Wohnungen 31a bis 31c bildet jeweils eine dezentrale Wasserversorgungsstation 1a bis 1c einen Übergabepunkt zwischen der Gebäudeinstallation 41 und einer wohnungsinternen Nutzerinstallation 34a bis 34c. Bei den Wohnungsstationen 1a bis 1c handelt es sich beispielsweise um eine der dezentralen Wohnungsstationen gemäß einer der Figuren 1 bis 3.

Beispielsweise umfasst die erste Nutzerinstallation 34a eine erste Zapfstelle in Form eines Waschbeckens 35 mit getrenntem Warm- und Kaltwasserausläufen die mit dem Trinkkaltwasseranschluss TKW und Trinkwarmwasseranschluss TWW der Wasserversorgungsstation 1a verbunden sind. Die Nutzerinstallation 34a umfasst des Weiteren eine Leitung zu einer Geschirrspülmaschine 36, die beispielsweise mit einem ersten Nutzwasseranschluss NW1 der Ausgestaltung gemäß Figur 2 oder 3 verbunden ist.

Die zweite Nutzerinstallation 34b der Wohnung 31b entspricht weitgehend der ersten Nutzerinstallation 34a der ersten Wohnung 31a. Im Unterschied dazu umfasst sie eine Leitung zu einer Toilette 37, die beispielsweise an einem zweiten Nutzwasseranschluss NW2 der Wasserversorgungsstation 1b angeschlossen ist. Des Weiteren umfasst die zweite Nutzerinstallation 31b eine Fußbodenheizung 38, die beispielsweise mit dem sekundären Vorlaufanschluss sVL und dem sekundären Rücklaufanschluss sRL der Wasserversorgungsstation 1 gemäß Figur 3 verbunden ist.

Die dritte Nutzerinstallation 34c umfasst eine Waschmaschine 39. Anders als die Geschirrspülmaschine 36 der ersten Nutzerinstallation 34a ist die Waschmaschine 39 an den gefilterten Trinkkaltwasseranschluss TKW der dritten Wasserversorgungsstation 1c angeschlossen. Auf diese Weise kann beispielsweise die Menge des eingesetzten Waschmittels reduziert und/oder auf die Beimischung von Wasserenthärtungspulver verzichtet werden. Die dritte Nutzerinstallation 34c umfasst des Weiteren einen konventionellen Heizkörper in Form eines Radiators 40, der beispielsweise an die sekundären Vor- und Rücklaufleitungsanschlüsse SVL und RVL gemäß der Wasserversorgungsstation 1 nach Figur 2 angeschlossen sind.

In der vierten Wohnung 31d befinden sich ausschließlich solche Zapfstellen, für die eine Filterung des über den Trinkwasserzulauf TWZ bereitgestellten Frischwassers nicht erforderlich oder nicht erwünscht ist. Beispielsweise ist dort eine erste Zapfstelle in Form eines Waschbeckens 35 mit lediglich einem Kaltwasseranschluss und eine zweite Zapfstelle in Form einer Toilette 37 vorgesehen. Die beiden genannten Verbraucher können entweder direkt an die Frischwasserleitung der Gebäudeinstallation 33 angeschlossen werden oder über eine dezentrale Wasserversorgungsstation 1d ohne eingebaute Trinkwasseraufbereitungsvorrichtung 5 an diese angeschlossen sein, wie in der Figur 4 angedeutet.

Die zuvor beschriebenen Vorrichtungen und Installationen eignen sich, wie eingangs beschrieben, insbesondere dazu, einem Nutzer einer jeweiligen Nutzeinheit größtmögliche Kontrolle über die Aufbereitung vom bereitgestellten Frischwasser der zentralen Gebäudeinstallation 33 oder sonstigen externen Frischwasserquelle zu geben.

Durch die Anordnung einer Trinkwasseraufbereitungsvorrichtung 5 innerhalb einer Wasserversorgungsstation 1, die sich in oder in unmittelbarer Nähe zu einem Nutzerbereich befindet, wird die Kontrolle, Wartung und Ansteuerung der Trinkwasseraufbereitungsvorrichtung 5 durch einen Nutzer oder ein von dem Nutzer beauftragten Fachmann ermöglicht oder zumindest stark vereinfacht. Auf diese Weise haben insbesondere Bewohner von Mehrfamilienhäusern eine bessere Kontrolle über das Trinkwasser innerhalb ihrer Nutzeinheit. Gleichzeitig wird die Wasserqualität an allen oder ausgewählten Zapfstellen verbessert. Dies führt wiederum zu einer verlängerten Lebensdauer der Nutzerinstallation und daran angeschlossenen Endgeräte, inklusive der Komponenten der dezentralen Wasserversorgungsstation 1 selbst. Beispielsweise kann eine ungewünschte Kalkbildung im gesamten Rohrsystem einer Nutzerinstallation und insbesondere zugehörigen Wasser- und Absperrhähnen vermeiden werden.

Im Vergleich zu zentralen Filtern im Bereich einer Gebäudeinstallation ergibt sich der weitre Vorteil, dass auf eine einmalige, größere Investition verzichtet werden kann. Stattdessen können einzelne Nutzeinheiten, gegebenenfalls nach und nach, mit verbessertem Trinkwasser aus nachgerüstenten Wasserversorgungsstation 1 bzw. Trinkwasseraufbereitungsvorrichtung 5 versorgt werden. Auch fallen die Kosten für etwaige Verbrauchsmittel wie etwa Spezialsalz direkt beim Nutzer an, so dass eine entsprechende Erfassung, Aufteilung und Abrechnung von Nebenkosten in Mehrfamilienhäusern entfallen können.

### Bezugszeichenliste

- 1: dezentrale Wasserversorgungsstation
- 2: Wasser-Wasser-Wärmetauscher
- 2a: Primärseite
- 2b: Sekundärseite
- 3: Heizungsteil
- 4: Trinkwasserteil
- 5: Trinkwasseraufbereitungsvorrichtung
- 6: Trägerplatte
- 7: Filtereinrichtung
- 8: Enthärtungseinheit
- 9: Salzvorrat
- 10: Schwimmer
- 11: Fenster
- 12: PM-Regler
- 12a: Durchflussmesser
- 12b: Drosselventil
- 13: (geschlossenes) Gehäuse
- 14a, 14b: Anschlussbereich
- 15: Desinfektionseinheit
- 16: UV-Quelle
- 17: Entkalkungseinheit
- 19: (elektronische) Steuervorrichtung
- 20: Kontrolllampe
- 21: Schnittstelle
- 22: elektrischer Durchlauferhitzer
- 23: Einspritzkreis
- 24: Rückschlagventil
- 25: Zirkulationspumpe
- 26: Dreiwegeventil
- 27a bis 27f: Temperatursensor
- 28a, 28b: Durchflusssensor
- 29: Haube
- 30: Haustechniksystem
- 31a bis 31d: Wohnung
- 32: Wärmequelle
- 33: Gebäudeinstallation
- 34a bis 34d: Nutzerinstallation
- 35: Waschbecken
- 36: Geschirrspülmaschine
- 37: Toilette
- 38: Fußbodenheizung
- 39: Waschmaschine
- 40: Radiator

- pVL: primärer Vorlauf
- pRL: primärer Rücklauf
- sVL: sekundärer Vorlauf
- sRL: sekundärer Rücklauf
- TWZ: Trinkwasserzulauf
- TKW: Trinkkaltwasseranschluss
- TWW: Trinkwarmwasseranschluss
- NW1, NW2: Nutzwasseranschluss

## Patentansprüche

1. Dezentrale Wasserversorgungsstation (1), insbesondere zum Bereitstellen von Trinkwarmwasser, für eine einzelne Nutzeinheit, umfassend:
- Versorgungsanschlüsse zum Anschließen der dezentralen Wasserversorgungsstation (1) an einen Vorlauf (pVL) und einen Rücklauf (pRL) einer Gebäudeinstallation (33);
- einen Eingangsanschluss, insbesondere einen Trinkwasserzulauf (TWZ), zum Anschließen der dezentralen Wasserversorgungsstation (1) an eine Frischwasserversorgungsleitung;
- einen ersten Ausgangsanschluss, insbesondere einen Trinkwarmwasseranschluss (TWW), zum Anschließen der dezentralen Wasserversorgungsstation (1) an eine Nutzerinstallation (34a-34c) der Nutzeinheit mit wenigstens einer Zapfstelle;
- einen Wasser-Wasser-Wärmetauscher (2), der primärseitig mit den Versorgungsanschlüssen und sekundärseitig mit dem Eingangsanschluss und dem ersten Ausgangsanschluss verbunden ist; und
- eine Trinkwasseraufbereitungsvorrichtung (5), wobei die Trinkwasseraufbereitungsvorrichtung (5) hydraulisch zwischen den Eingangsanschluss und den Wasser-Wasser-Wärmetauscher (2) geschaltet ist.

2. Dezentrale Wasserversorgungsstation (1) nach Anspruch 1, wobei die Trinkwasseraufbereitungsvorrichtung (5) wenigstens eine der folgenden Komponenten umfasst:
- eine Desinfektionseinheit (15) zum Desinfizieren des von dem Eingangsanschluss bereitgestellten Wassers, insbesondere mittels Bestrahlung durch UV-Strahlung;
- eine Filtereinheit (7), insbesondere ein Aktiv-Kohle-Filter oder Sedimentfilter, zum Reinigen des von dem Eingangsanschluss bereitgestellten Wassers;
- eine Entkalkungseinheit (17) zum Entkalken des von dem Eingangsanschluss bereitgestellten Wassers, insbesondere mittels heterogener Katalyse; und/oder
- eine Enthärtungseinheit (8) zum Enthärten des von dem Eingangsanschluss bereitgestellten Wassers, insbesondere mittels Ionenaustauschs durch Salz (9).

3. Dezentrale Wasserversorgungsstation (1) nach Anspruch 1 oder 2, weiter umfassend eine Überwachungskomponente zum Überwachen einer Funktion und/oder wenigstens eines Betriebsstoffes der Trinkwasseraufbereitungsvorrichtung (5).

4. Dezentrale Wasserversorgungsstation (1) nach Anspruch 3, wobei die Überwachungskomponente einen Teil einer elektronischen Steuervorrichtung (19) der dezentralen Wasserversorgungsstation (1) bildet, und dazu eingerichtet ist, im Falle einer Fehlfunktion der Trinkwasseraufbereitungsvorrichtung (5) oder einer unzureichenden Menge wenigstens eines Betriebsstoffes einem Nutzer der Nutzeinheit eine Warnmeldung anzuzeigen.

5. Dezentrale Wasserversorgungsstation (1) nach einem der Ansprüche 1 bis 4, weiter umfassend wenigstens einen zweiten Ausgangsanschluss, insbesondere einen Trinkkaltwasseranschluss (TKW), zum Bereitstellen von gefiltertem Wasser von der dezentralen Wasserversorgungsstation (1) an die Nutzerinstallation (34a-34c), wobei der wenigstens eine zweiten Ausgangsanschluss hydraulisch hinter der Trinkwasseraufbereitungsvorrichtung (5) anschlossen ist.

6. Dezentrale Wasserversorgungsstation (1) nach einem der Ansprüche 1 bis 5, weiter umfassend wenigstens einen dritten Ausgangsanschluss, insbesondere einen Nutzwasseranschluss (NW1, NW2), zum Bereitstellen von ungefiltertem Wasser von der dezentralen Wasserversorgungsstation (1) an die Nutzerinstallation (34a-34c), wobei der wenigstens einen dritte Ausgangsanschluss hydraulisch direkt, unter Umgehung der Trinkwasseraufbereitungsvorrichtung (5), mit dem Eingangsanschluss verbunden ist.

7. Dezentrale Wasserversorgungsstation (1) nach einem der Ansprüche 1 bis 6, weiter umfassend:
- einen hydraulisch zwischen die Versorgungsanschlüsse (pVL, pRL) und den Wasser-Wasser-Wärmetauscher (2) geschalteten Durchflussregler; und
- eine Steuerkomponente, wobei die Steuerkomponente dazu eingerichtet ist, den Durchflussregler entsprechend einer an dem ersten Ausgangsanschluss abgegebenen Wassermenge und/oder gewünschten Wassertemperatur anzusteuern.

8. Dezentrale Wasserversorgungsstation (1) nach einem der Ansprüche 1 bis 7, weiter umfassend einen elektrischen Durchlauferhitzer (22), wobei der elektrische Durchlauferhitzer (22) hydraulisch entweder zwischen den Versorgungsanschluss für den Vorlauf (pVL) und einen primären Eingang des Wasser-Wasser-Wärmetauschers (2) oder zwischen einen sekundären Ausgang des Wasser-Wasser-Wärmetauschers (2) und den ersten Ausgangsanschluss geschaltet ist.

9. Dezentrale Wasserversorgungsstation (1) nach Anspruch 8, weiter umfassend wenigstens einen Temperatursensor (27a) zum Erfassen einer Wassertemperatur, insbesondere der Temperatur des am ersten Ausgangsanschlusses bereitgestellten Wasser, und eine Steuerkomponente zur Ansteuerung des elektrischen Durchlauferhitzers (22), wobei die Steuerkomponente dazu eingerichtet ist, den elektrischen Durchlauferhitzer (22) zuzuschalten, sofern dies zum Erreichen einer gewünschten Solltemperatur des am ersten Ausgangsanschlusses bereitgestellten Wassers erforderlich ist.

10. Dezentrale Wasserversorgungsstation (1) nach einem der Ansprüche 1 bis 9, weiter umfassend ein Gehäuse (13), wobei der Wasser-Wasser-Wärmetauscher (2) und die Trinkwasseraufbereitungsvorrichtung (5) von dem Gehäuse (13) umgeben sind, und die Anschlüsse in einem Anschlussbereich (14a, 14b) des Gehäuses (13) im Bereich einer Gehäusewand oder Gehäuseöffnung angeordnet sind.

11. Dezentrale Wasserversorgungsstation (1) nach Anspruch 10, wobei die Trinkwasseraufbereitungsvorrichtung (5) in einem Bereich des Gehäuses (13) angeordnet ist, in dem sich keine Rohrleitungen befinden, und eine gesamte zur Verfügung stehende Tiefe des Gehäuses (13) ausfüllt.

12. Dezentrale Wasserversorgungsstation (1) nach einem der Ansprüche 1 bis 11, bei dem die Tiefe der dezentralen Wasserversorgungsstation (1) maximal 110mm beträgt.

13. Dezentrale Wasserversorgungsstation (1) nach einem der Ansprüche 1 bis 12, weiter aufweisend einen Anschluss zum Zuführen wenigstens eines Betriebsmittels für die Trinkwasseraufbereitungsvorrichtung (5) von außerhalb der dezentralen Wasserversorgungsstation (1).

14. Haustechniksystem (30) für ein Gebäude mit mehreren Nutzeinheiten, insbesondere mehreren Wohnungen (31a-31d), wobei im Bereich mindestens einer der Nutzeinheiten eine dezentrale Wasserversorgungsstation (1a-1d) nach einem der Ansprüche 1 bis 13 angeordnet ist.

15. Haustechniksystem (30) nach Anspruch 14, wobei im Bereich jeder der Nutzeinheiten jeweils eine dezentrale Wasserversorgungsstation (1a-1d) nach einem der Ansprüche 1 bis 13 angeordnet ist.
